# EUROPEAN PATENT APPLICATION

(11) **EP 0 949 220 A1**
(43) Date of publication of application: **13.10.1999**
(21) Application number: 98943079.8
(22) Date of filing: 21.09.1998
(51) Int. Cl.: C04B 35/48, H01M 8/12

(54) **ZIRCONIA SINTER FOR SOLID ELECTROLITE AND PROCESS FOR PRODUCING THE SAME**

(30) Priority: 24.09.1997 JP 25877597
(71) Applicant: NIPPON SHOKUBAI CO., LTD., Osaka-shi, Osaka 541 (JP)
(72) Inventor: HATA, Kazuo, Hyogo-ken 670-0093 (JP); AIKAWA, Norikazu, Hyogo-ken (JP); TAKASAKI, Keijirou, Hyogo-ken 670-0081 (JP)
(74) Representative: Müller-Boré & Partner Patentanwälte
(86) International application number: JP9804251
(87) International publication number: WO9915477

(57) **Abstract**

A yttrium oxide-stabilized zirconia sinter and a process for producing the same, which is excellent in strength and oxygen ion conductivity for use as solid electrolyte and in high temperature durability, and can be produced at low costs. The sinter is produced by using as a source of yttrium oxide as a stabilizer a rare earth oxide concentrate including 50 to 90 weight percent of yttrium oxide obtained by purifying a rare earth ore instead of highly purified yttrium oxide and regulating the total content of rare earth element oxides in the zirconia sinter to be in the range of 3 to 12 mole percent.

## Description

### TECHNICAL FIELD

This invention relates to a zirconia sinter stabilized with yttrium oxide for solid electrolyte, and a process for producing the same, in particular, to a technique which makes it possible to produce a zirconia sinter stabilized with yttrium oxide at low cost by using concentrated rare earth oxides as a source of yttrium oxide, the yttrium oxide-stabilized zirconia sinter having high temperature durability and being excellent as solid electrolyte.

### BACKGROUND ART

Since having an excellent oxygen ion conductivity, yttrium oxide-stabilized zirconia sinter is used for a solid electrolyte in an oxygen sensor and the like. In recent years, such zirconia sinter is being considered to be used as a solid electrolyte film in a fuel cell,

When zirconia sinter is practically utilized for a solid electrolyte of fuel cell, it is important that the power generation cost of the fuel cell system is advantageous against other power generation systems. To this end, it is necessary to produce the fuel cell system at low cost. Therefore, there is the demand of inexpensive zirconia sinter.

Commercially available yttrium oxide-stabilized zirconia powder, which has been conventionally used as material for solid electrolyte, is produced by the following steps. A solution of purified yttrium salt and zirconium salt is prepared. The solution is subjected to neutralizing coprecipitation and hydrolysis. Thereafter, the resultant is filtered, washed with water, calcined, and crushed into powder. In this process, however, zirconia and yttrium oxide having as high purity as 99.8 percent or higher are used as starting raw materials, consequently resulting in the expensive yttrium oxide-stabilized zirconia sinter powder. This is the significant problem in the industrialization. Even if carrying out mass production of such zirconia sinter powder, drastic cost reduction cannot be expected.

In an attempt to reduce the price of zirconia powder, Japanese Unexamined Patent Publication No. 61-6175 proposes zirconia sinter which is produced by using inexpensive rare earth material as a source of yttrium oxide for stabilizing zirconia. The zirconia sinter is excellent in the abrasion resistance and the corrosion resistance, and also has a high density and a high mechanical strength. The zirconia sinter contains 1.5 to 2.9 mole percent of all rare earth oxides, including yttrium oxide.

As mentioned above, the use of highly purified yttrium oxide as starting material increases the price of zirconia sinter because of the fact that the highly purified yttrium oxide is very expensive. Even if being mass-produced in the industrialization, the price of such zirconia sinter cannot be expected to be greatly reduced.

The zirconia sinter disclosed in Japanese Unexamined Patent Publication No. 61-6175 is excellent in the abrasion resistance, the corrosion resistance, and the mechanical strength. The zirconia sinter is intended for use as industrial material for cutting tools, various balls, mechanical seals, dices an the like, knives, scissors, and tablewares. Accordingly, the total content of yttrium oxide and other rare earth oxides in the zirconia sinter is limited to the range of 1.5 to 2.9 mole percent. However, the inventors of this application have found that the zirconia sinter is improper for solid electrolyte.

In view of the above-described problems, it is an object of the present invention to provide a zirconia sinter stabilized with yttrium oxide and a process for producing the same which makes it possible to use inexpensive starting material for yttrium oxide, and have excellent properties for solid electrolyte.

### DISCLOSURE OF THE INVENTION

The present invention has been conducted to solve the above-mentioned problems. In producing yttrium oxide-stabilized zirconia sinter, a rare earth oxide concentrate obtained by purifying a rare earth ore containing yttrium oxide is used as a source of yttrium oxide, instead of highly purified yttrium oxide, yttrium hydroxide, or yttrium salt which has been conventionally used. The total content of rare earth oxides with respect to zirconia is regulated to fall within a specified range. Thus-obtained yttrium oxide-stabilized zirconia sinter has substantially the same mechanical strength and oxygen ion conductivity as those of conventional zirconia sinter. Especially, its high temperature durability is excellent. Even if the zirconia sinter is exposed to high temperature, there is little deterioration in its properties with the elapse of time. The zirconia sinter has excellent performance for solid electrolyte.

The inventive zirconia sinter for solid electrolyte is a yttrium oxide-stabilized zirconia sinter for solid electrolyte, containing zirconia as a main component. The zirconia sinter includes 3 to 12 mole percent of rare earth oxides in terms of R₂O₃ (wherein R denotes a rare earth element). The rare earth oxides include 50 to 90 weight percent of yttrium oxide and other rare earth oxides as substantial remainder.

Specific kinds and contents of the remaining other rare earth oxides are as follows: 5 to 30 weight percent of oxides of at least two elements selected from the group consisting of elements having atomic numbers 21 and 57 to 64; and 10 to 40 weight percent of oxides of at least two elements selected from the group consisting of elements having atomic numbers 65 to 71 (100 weight percent in total as rare earth oxide concentrate).

A process according to the present invention is directed to a process for producing a yttrium oxide-stabilized zirconia sinter for solid electrolyte. In the process, a rare earth oxide concentrate including 50 to 90 weight percent of yttrium oxide is used as a source of yttrium oxide. The rare earth oxide concentrate is preferably used that includes 50 to 90 weight percent of yttrium oxide, 5 to 30 weight percent of oxides of at least two elements selected from the group consisting of elements having atomic numbers 21 and 57 to 64, and 10 to 40 weight percent of oxides of at least two elements selected from the group consisting of elements having atomic numbers 65 to 71 (100 weight percent in total). Thus-obtained zirconia sinter has substantially the same mechanical strength and oxygen ion conductivity as those of conventional zirconia sinter. Especially, the high temperature durability is excellent, Accordingly, this process can produce a yttrium oxide-stabilized zirconia sinter for solid electrolyte having little deterioration in its properties with the elapse of time, even if exposed to high temperature.

### BEST MODE FOR CARRYING OUT THE INVENTION

The " rare earth oxide concentrate containing 50 to 90 weight percent of yttrium oxide" in the present invention means a material which is obtained by concentrating and purifying rare earth ore, and contains yttrium oxide in 50 to 90 weight percent, and a sum of yttrium oxide and other rare earth oxides is 95 weight percent or more.

The rare earth oxide concentrate is obtained by the following steps. A rare earth ore having a larger amount of yttrium oxide is used, for example, xenotime in Malaysia, xenotime in Jiangxi, China, and Longnan ore in China. Such rare earth ore is treated with acid or alkali to be solubilized, and then is precipitated in the form of salt, e.g., oxalate. Thereafter, the salt is dried and sintered. Table 1 shows a specific composition of rare earth oxide concentrates obtained from rare earth ores mentioned above (excerpted from "Main Components of Chinese Rare Earth Ores and Typical Rare Earth Ores in World" published by Mitsuya Trade Co., Ltd.)

**Table 1**

| (Weight %) | | | |
|---|---|---|---|
| Atomic Number | Oxide | A | B |
| 21 | Sc₂O₃ | - | - |
| 39 | Y₂O₃ | 60.8 | 64.1 |
| 57 | La₂O₃ | 0.5 | 2.2 |
| 58 | CeO₂ | 5.0 | 1.1 |
| 59 | Pr₂O₃ | 0.7 | 1.1 |
| 60 | Nd₂O₃ | 2.2 | 3.5 |
| 61 | Pm₂O₃ | - | - |
| 62 | Sm₂O₃ | 1.9 | 2.3 |
| 63 | Eu₂O₃ | 0.2 | 0.1 |
| 64 | Gd₂O₃ | 4.0 | 5.7 |
| 65 | Td₂O₃ | 1.0 | 1.1 |
| 66 | Dy₂O₃ | 8.7 | 7.5 |
| 67 | Ho₂O₃ | 2.1 | 1.6 |
| 68 | Er₂O₃ | 5.4 | 4.3 |
| 69 | Tm₂O₃ | 0.9 | 0.6 |
| 70 | Yb₂O₃ | 6.2 | 3.3 |
| 71 | Lu₂O₃ | 0.4 | 0.5 |
| Others | | - | 1.0 |

| | | | |
|---|---|---|---|
| A: Concentrate from Xenotime in Malaysia | | | |
| B: Concentrate from Xenotime in Jiangxi, China | | | |

Even in the case of using low-grade rare earth ores containing a smaller amount of yttrium oxide, the rare earth oxide concentrate containing 50 to 90 weight percent of yttrium oxide can be prepared by separation of rare earth oxides from one another, and other treatment. Specifically, a low-grade rare earth ore is hydrolyzed by acid or alkali into hydroxides which are then treated with hydrochloric acid to precipitate and remove undesired compounds such as uranium compound. Thereafter, the rare earth compounds are precipitated into the form of salt, e.g., oxalate, and then dried and sintered.

In the present invention, the total content of yttrium oxide and other rare earth oxides in the rare earth oxide concentrate is 95 weight percent or more, and preferably 98 weight percent or more, and more preferably 99.5 weight percent or more.

In the present invention, the rare earth oxide concentrate is preferably used that includes 50 to 90 weight percent of yttrium oxide, 5 to 30 weight percent of oxides of at least two elements selected from the group consisting of elements having atomic numbers 21 and 57 to 64, and 10 to 40 weight percent of oxides of at least two elements selected from the group consisting of elements having atomic numbers 65 to 71, (100 weight percent in total).

An inventive zirconia sinter includes a zirconia as a main component, and 3 to 12 mole percent of rare earth oxides existing in the zirconia in a solid-solution state or a dispersion state. The rare earth oxides include 50 to 90 weight percent of yttrium oxide, 5 to 30 weight percent of oxides of at least two elements selected from the group consisting of elements having atomic numbers 21 and 57 to 64, and 10 to 40 weight percent of oxides of at least two elements selected from the group consisting of elements having atomic numbers 65 to 71, (100 weight percent in total).

Especially preferable is a zirconia sinter containing rare earth oxides including 55 to 90 weight percent of yttrium oxide, 10 to 20 weight percent of oxides of at least two elements selected from the group consisting of elements having atomic numbers 21 and 57 to 64, and 15 to 30 weight percent of oxides of at least two elements selected from the group consisting of elements having atomic numbers 65 to 71.

In the case that the content of yttrium oxide in the zirconia sinter is less than 50 weight percent, the zirconia sinter is likely to have poor mechanical strength, and the high temperature sintering of 1500°C or higher should be conducted to obtain a relative density of 95 percent or higher. On the other hand, in the case that the content of yttrium oxide is more than 90 weight percent, the rare earth oxide concentrate should be more purified. This increases the production cost, which is contradictory to the objective of inexpensive source of yttrium oxide.

The rare earth oxide concentrate may further contain oxides of the element (Sc) having atomic number 21 and the elements (La, Ce, Pr, Nd, Pm, Sm, Eu and Gd) having atomic numbers 57 to 64, and oxides of the elements (Td, Dy, Ho, Er, Tm, Yb, and Lu) having atomic numbers 65 to 71. Specifically, it may be preferable that the rare earth oxide concentrate contains 5 to 30 weight percent of oxides of at least two elements selected from the group consisting of the elements having atomic numbers 21 and 57 to 64, and 10 to 40 weight percent of oxides of at least two elements selected from the group consisting of the elements having atomic numbers 65 to 71.

It is preferable that the rare earth oxide concentrate contains a proper amount of oxides of two elements or more selected from the group of the so-called light rare earth elements having atomic numbers 21 and 57 to 64, and a proper amount of oxides of two elements or more selected from the group of the so-called heavy rare earth elements having atomic numbers 65 to 71 in addition to zirconia because the conductivity of the zirconia sinter made of zirconia and this rare earth oxide concentrate is hard to vary with the elapse of time when used for solid electrolyte. Especially it is preferable that the rare earth oxide concentrate contain oxides of such light rare earth elements as Ce, Nd, Sm, and Gd, and oxides of such heavy rare earth elements as Td, Dy, Er, and Yb.

If the content of oxide of light rare earth element is less than 5 weight percent, and the content of oxide of heavy rare earth element is less than 10 weight percent, the strength and the conductivity of the zirconia sinter are liable to greatly vary with the elapse of time when used at a high temperature as solid electrolyte. On the other hand, if the content of oxide of light rare earth element is more than 30 weight percent, and the content of heavy rare earth element is more than 40 weight percent, the strength of the zirconia sinter is liable to greatly vary with the elapse of time when used at high temperature as solid electrolyte because suppression of grain growth lowers.

The content of cerium oxide in the rare earth oxide concentrate is preferably suppressed to 10 weight percent or lower, and more preferably to 5 weight percent or lower, because of the fact that if the content of cerium oxide is more than 10 weight percent, the resultant zirconia sinter exhibits the mixed conductivity characteristics having an ion conductivity and an electronic conductivity.

The content of lanthanum oxide in the rare earth oxide concentrate is preferably suppressed to 5 weight percent or lower, and more preferably to 3 weight percent or lower, because of the fact that if the content of lanthanum oxide is more than 5 weight percent, the oxygen ion conductivity of the resultant zirconia sinter lowers when used at a high temperature for a long period of time as solid electrolyte film of fuel cell. This is presumably due to zirconia and lanthanum oxide cause a solid phase reaction with each other to produce such low conductive compounds as La₂Zr₂O₇.

Accordingly, the total content of the rare earth oxide concentrate in the zirconia sinter is regulated to 3 to 12 mole percent, and preferably 4.5 to 11 mole percent, and more preferably, 6 to 10 mole percent in terms of R₂O₃ wherein R denotes a rare earth element. If the total content of the rare earth oxide concentrate is less than 3 mole percent, the resultant zirconia sinter has poor oxygen ion conductivity. Contrary to this, if the total content of the rare earth oxide concentrate is more than 12 mole percent, the resultant zirconia sinter has poor strength and considerably low oxygen ion conductivity. The zirconia sinter is not suitable as solid electrolyte.

Although containing, in addition to yttrium oxide, other rare earth oxides and impurities such as oxides of iron, titanium, aluminum, silicon, calcium, magnesium, and sodium which are inevitably contained in a rare earth ore, the inventive zirconia sinter has a mechanical strength and an oxygen ion conductivity substantially equaling those of the conventional zirconia sinter made of highly purified yttrium oxide. In addition, the inventive zirconia sinter has excellent high temperature durability. Accordingly, the inventive zirconia sinter exhibits industrially satisfactory performance as solid electrolyte.

Particularly, as will be described later in Examples, the inventive zirconia sinter using the rare earth oxide concentrate containing 50 to 90 weight percent of yttrium oxide as yttrium oxide source has more excellent high temperature durability than the conventional zirconia sinter using a material containing highly purified yttrium oxide of high purity, i.e., 99 weight percent or more of yttrium oxide. This advantage is worthy of special remarks more than the effect of raw material cost reduction.

In the production of the inventive zirconia sinter, a proper amount of alumina, titania, calcia, and/or magnesia, which are conventionally used in general to increase the strength, may be added according to need. It may be appreciated to use salt of zirconium oxychloride, zirconium nitrate or the like, or zirconia powder, which are conventionally used as a source of zirconia. In the case of using the salt, zirconium salt and rare earth oxide concentrate powder are dissolved in water in such a manner that the amount of the entire rare earth oxide with respect to the amount of the zirconia falls within the specified range described above. Thereafter, the liquid solution is subjected to coprecipitation or hydrolysis to produce hydroxides. The hydroxides are dried, and then baked to produce material powder for zirconium sinter. In the case of using zirconia powder, zirconia powder and rare earth oxide concentrate powder are mixed in a solid phase in such a manner that the amount of the entire rare earth oxide with respect to the amount of zirconia falls within the specific range. The mixture is baked or calcined to produce raw material powder for zirconia sinter.

Alternatively, raw material powder for yttrium oxide stablized zirconia sinter may be produced by mixing hydroxides, carbonates, chlorides, sulfides, oxides and/or the like of rare earth elements by a wet process or a dry process to obtain a mixed powder containing a specific amount of rare earth oxides (,and heating the mixed powder, if necessary), and mixing the mixed powder with zirconia powder.

The material power for zirconia sinter containing the rare earth oxide concentrate preferably has an average particle diameter of 0.3 to 3 µm, and more preferably, 0.5 to 1.5 µm, and 90 volume percent of particles falling in a diameter range of 0.5 to 10 µm, and more preferably 1 to 3 µm.

In the case that the average particle diameter is less than 0.3 µm or the diameter of 90 volume percent of particles is less than 0.5 µm, a large amount of binder is required in the process of forming into a sheet. It is otherwise difficult to produce a zirconia sinter having a desired shape. On the other hand, if the average particle diameter is more than 3 µm or the diameter of 90 volume percent of particles is more than 10 µm, the resultant sinter has poor strength, and is hard to have practicable durability for solid electrolyte.

The average particle diameter and the diameter of 90 volume percent of particles are shown in terms of measurements obtained by the laser diffraction type particle size analyzer of SALD-1100 of Shimadzu Corp.

The inventive zirconia sinter can be produced by conventional zirconia production process and conditions without special arrangements, except for that the rare earth oxide concentrate containing 50 to 90 weight percent of yttrium oxide instead of highly purified yttrium oxide as a source of yttrium oxide for stabilization, and the content of the rare earth oxide concentrate in the zirconia sinter is regulated to 3 to 12 mole percent.

For example, the inventive zirconia sinter is produced by the following steps: Zirconia and rare earth oxide concentrate containing 50 to 90 weight percent of yttrium oxide are mixed with each other. The content of the rare earth oxide concentrate is 3 to 12 mole percent with respect to the zirconia sinter. The mixture is kneaded in a ball mill together with a binder, a plasticizer, a solvent and the like to prepare a slurry. The slurry is formed into a predetermined shape by a doctor blade or the like, and then sintered at 1000 to 1500°C.

The inventive zirconia sinter is not limited into a particular shape. The zirconia sinter may be formed into a desired shape suitable for solid electrolyte, for example, a sheet-like shape, a corrugated shape, a dimple-like shape, a pipe-like shape having a closed end.

### EXAMPLES

Hereinafter, the present invention will be further described in detail with reference to examples. However, it is to be noted that the present invention is not limited into the following examples, and change and modifications may be made without depart from the scope of the invention, and they should be construed as being included therein. In the following examples, the three-point bending strength, the conductivity, and the high temperature durability were measured by the following methods.

### [Three-point bending strength]

A sample piece of zirconia sinter in the form of a sheet (size: 5mm × 50mm) was prepared. The three-point bending strength of the sample piece was measured with a universal testing machine of 4301-type of Instron Co., Ltd. in conformance with Japanese Industrial Standard R-1601 at a span of 20mm and a crosshead speed of 0.5mm/min.

### [Conductivity]

A sample piece of a sintered zirconia sheet having a size of 5mm × 50mm was prepared. Around the sample piece, a platinum wire having a diameter of 0.2mm was wound at an interval of 10mm. The conductivity of the sample piece was measured by a direct current four terminal method in the state where the sample piece with the platinum wire wound therearound was heated at 1000°C in an electric furnace.

### [High Temperature Durability]

A sample piece of a sintered zirconia sheet having a size of 5mm × 50mm was prepared. The sample piece was heated to 1000°C for 200 hours in the atmosphere, and after that, the three-point bending strength and the conductivity of the sample piece was measured by the same methods as the above respectively.

### Example 1

**Table 1**

| (weight %) | | | |
|---|---|---|---|
| Atomic Number | Oxide | A | B |
| 21 | Sc₂O₃ | - | - |
| 39 | Y₂O₃ | 60.8 | 64.1 |
| 57 | La₂O₃ | 0.5 | 2.2 |
| 58 | CeO₂ | 5.0 | 1.1 |
| 59 | Pr₂O₃ | 0.7 | 1.1 |
| 60 | Nd₂O₃ | 2.2 | 3.5 |
| 61 | Pm₂O₃ | - | - |
| 62 | Sm₂O₃ | 1.9 | 2.3 |
| 63 | Eu₂O₃ | 0.2 | 0.1 |
| 64 | Gd₂O₃ | 4.0 | 5.7 |
| 65 | Td₂O₃ | 1.0 | 1.1 |
| 66 | Dy₂O₃ | 8.7 | 7.5 |
| 67 | Ho₂O₃ | 2.1 | 1.6 |
| 68 | Er₂O₃ | 5.4 | 4.3 |
| 69 | Tm₂O₃ | 0.9 | 0.6 |
| 70 | Yb₂O₃ | 6.2 | 3.3 |
| 71 | Lu₂O₃ | 0.4 | 0.5 |
| Others | | - | 1.0 |

| | | | |
|---|---|---|---|
| A: Concentrate from Xenotime in Malaysia | | | |
| B: Concentrate from Xenotime in Jiangxi, China | | | |

The rare earth oxide concentrate from xenotime ore in Malaysia shown in Table 1 was dissolved in 2N hydrochloric acid aqueous solution The aqueous solution and a zirconium oxychloride aqueous solution were mixed with each other in such a manner that the content of the former solution was 8 mole percent in terms of the rare earth oxide concentrate. The concentration of zirconium in the solution was 0.2 mole percent/L (hereinafter, L denotes liter) in terms of zirconia (ZrO₂).

1.2 liter of water was placed in a vessel type reactor equipped with a stirrer, and ammonia water was added in the reactor vessel in such a manner that the mixture had 8.5 pH. To the mixture, the above-prepared solution was added at a liquid speed of 200cc per minute, and ammonia water (aqueous solution containing 28 weight percent of ammonium) was added at a liquid speed of 200cc per hour while stirring the mixture with a metering pump. Neutralizing coprecipitation reaction was continuously proceeded by discharging the reacted liquid from the reactor vessel by another pump to keep the liquid amount in the reactor vessel substantially constant. In this process, the respective liquid speeds of the solution and the ammonia water was regulated in such a manner that the pH of the reacting liquid had 8.5±0.2. The reacted liquid discharged from the reactor vessel was filtered to separate hydroxide from the base solution. The separated hydroxide was washed with water to remove ammonium chloride therefrom.

The hydroxide washed with water was dispersed in n-butanol which is then subjected to distillation at a normal pressure until rising to 105°C, and then dehydrated. The dehydrated n-butanol dispersion liquid containing hydroxide was spray-dried to obtain powder having a high fluidity. The powder was baked at 1000°C for 1 hour, and as a result, zirconia fine powder containing no aggregate was obtained. The respective contents of rare earth oxides in the zirconia fine powder are shown in Table 2. The average particle diameter of the zirconia fine powder, measured by the laser diffraction method using the SALD1100 laser diffraction type particle size analyser of Shimadzu Corp., was 1.1 µm, and 90 volume percent of particles had a diameter of 2.4 µm.

**Table 2**

| (mole % in sinter) | | | |
|---|---|---|---|
| Atomic Number | Rare earth oxide | A | B |
| 21 | Sc₂O₃ | - | - |
| 39 | Y₂O₃ | 4.9 | 6.4 |
| 57 | La₂O₃ | 0.04 | 0.22 |
| 58 | CeO₂ | 0.4 | 0.11 |
| 59 | Pr₂O₃ | 0.06 | 0.11 |
| 60 | Nd₂O₃ | 0.18 | 0.35 |
| 61 | Pm₂O₃ | - | - |
| 62 | Sm₂O₃ | 0.15 | 0.23 |
| 63 | Eu₂O₃ | 0.02 | 0.01 |
| 64 | Gd₂O₃ | 0.32 | 0.57 |
| 65 | Td₂O₃ | 0.08 | 0.11 |
| 66 | Dy₂O₃ | 0.7 | 0.75 |
| 67 | Ho₂O₃ | 0.17 | 0.16 |
| 68 | Er₂O₃ | 0.43 | 0.43 |
| 69 | Tm₂O₃ | 0.07 | 0.06 |
| 70 | Yb₂O₃ | 0.5 | 0.33 |
| 71 | Lu₂O₃ | 0.03 | 0.05 |
| Total | | 8.05 | 9.89 |

| | | | |
|---|---|---|---|
| A: Concentrate from Xenotime in Malaysia | | | |
| B: Concentrate from Xenotime in Jiangxi, China | | | |

To 100 parts by weight of thus-prepared zirconia fine powder, added were 15 parts by weight of a copolymer as binder, produced by copolymerizing 80 weight percent of n-butylmethacrylate, 15 weight percent of 2-ethylhexylacrylate, and 5 weight percent of dimethylamino ethylmethacrylate, and having a number average molecular weight of 50000 and a glass transition temperature of 2°C, 3 parts by weight of dibutylphthalate as a plasticizer, and 50 parts by weight of a mixed solvent of toluene and ethyl acetate (1/1). The mixture was kneaded in a ball mill to prepare a slurry.

The viscosity of the slurry was regulated to 30 poise. The slurry was formed into the shape of a sheet by the doctor blade method, and was dried at 100°C for 1 hour to prepare a green sheet of 0.4mm in thickness. The green sheet was sintered at 1480°C for 3 hours, and as a result, a sample of zirconia sinter in the form of a sheet was obtained.

The three-point strength and the conductivity of the sample piece were measured before and after the exposure to the high temperature. The results of the measurement are shown in Table 3.

### Example 2

Zirconia fine powder containing rare earth oxides was prepared using the rare earth oxide concentrate from xenotime ore in Jiangxi, China, shown in Table 1, in the same steps as Example 1 except for that the total content of rare earth oxides was regulated to 10 mole percent.

The respective contents of rare earth oxides in the zirconia fine powder are shown in Table 2. The average particle diameter of the zirconia fine powder was 0.7 µm, and the diameter of 90 volume percent of particles was 1.5 µm. These measurements were measured by the laser diffraction method using the SALD 1100-type laser diffraction type particle size analyzer of Shimadzu Corp.

To 100 parts by weight of thus prepared zirconia fine powder, added were 15 parts by weight of a copolymer as binder, produced by copolymerizing 80 weight percent of n-butyl methacrylate, 15 weight percent of 2-ethylhexyl acrylate, and 5 weight percent of dimethylaminoethyl methacrylate, and having a number average molecular weight of 50000 and a glass transition temperature of 2°C, 3 parts by weight of dibutylphthalate as a plasticizer, and 50 parts by weight of a mixed solvent of toluene and ethyl acetate (1/1). The mixture was kneaded in a ball mill to prepare a slurry.

The viscosity of the slurry was regulated to 25 poise, and then formed into the shape of a sheet, and dried at 100°C for 1 hour to prepare a green sheet of 0.4mm in thickness. The green sheet was sintered at 1450°C for 3 hours, and as a result, a sample piece of zirconia sinter in the form of a sheet was obtained.

Similarly to Example 1, the three-point bending strength and the conductivity of the sample piece were measured before and after the exposure to the high temperature. The results of the measurement are shown in Table 3.

### Reference Example 1

A sintered zirconia sheet was obtained in the same manner as Example 1 except for that the zirconia powder "TZ-8Y" of Tosoh Co., Ltd. containing 8.0 mole percent of yttrium oxide was used as material powder, and the sintering was conducted at 1450°C for 2 hours.

Similarly to Example 1, the three-point bending strength and the conductivity of the zirconia sinter in the form of a sheet were measured before and after the exposure to the high temperature. The results of the measurement are shown in Table 3.

### Reference Example 2

A zirconia sintered sheet was obtained in the same manner as Example 1 except for that the zirconia powder "OZC-10YC" of Sumitomo Osaka Cement Co., Ltd. containing 10 mole percent of yttrium oxide was used as material powder, and the sintering was conducted at 1450°C for 2 hours.

Similarly to Example 1, the three-point bending strength and the conductivity of the zirconia sinter in the form of a sheet were measured before and after the exposure to the high temperature. The results of the measurement are shown in Table 3.

**Table 3**

| | Ex 1 | Ex 2 | Re Ex 1 | Re Ex 2 |
|---|---|---|---|---|
| Stabilizer | Rare earth oxide concentrate | Rare earth oxide concentrate | Y₂O₃ | Y₂O₃ |
| Total content of rare earth oxides (mole %) | 8 | 10 | 8 | 10 |
| Content of Y₂O₃ in rare earth oxide (mole %) | 4.9 | 6.4 | 8 | 10 |

| Conductiv -ity (/Ω·cm) at 1000°C | | | | |
|---|---|---|---|---|
| Before Exposure | 0.14 | 0.13 | 0.16 | 0.15 |
| After Exposure 1000°C for 200 hours | 0.13 | 0.13 | 0.13 | 0.13 |

| Three-point bending strength (kgf/mm²) | | | | |
|---|---|---|---|---|
| Before Exposure | 40 | 38 | 41 | 35 |
| After Exposure of 1000°C for 200 hours | 38 | 36 | 36 | 32 |

### INDUSTRIAL APPLICABILITY

According to the present invention, rare earth oxide concentrate, which is relatively inexpensive, is used for yttrium oxide material which is an essential component as a stabilizer. This will considerably reduce the production cost of yttrium oxide-stabilized zirconia sinter, and improve the high temperature durability. Therefore, the zirconia sinter can be produced at low costs that is excellent for use as solid electrolyte in the aspect of mechanical strength, oxygen ion conductivity and high temperature durability.

## Claims

1. A zirconia sinter for solid electrolyte comprising a zirconia as a main component, and 3 to 12 mole percent of rare earth oxides in terms of R₂O₃ wherein R denotes a rare earth element, the rare earth oxides including 50 to 90 weight percent of yttrium oxide and other rare earth oxides as substantial remainder.

2. A zirconia sinter for solid electrolyte, wherein the rare earth oxides include 50 to 90 weight percent of yttrium oxide, 5 to 30 weight percent of oxides of at least two elements selected from the group consisting of elements having atomic numbers 21 and 57 to 64, and 10 to 40 weight percent of oxides of at least two elements selected from the group consisting of elements having atomic numbers 65 to 71 (100 weight percent in total).

3. A zirconia sinter for solid electrolyte according to claim 1 or 2, wherein the rare earth oxides includes 10 weight percent or less of cerium oxide, and 5 weight percent or less of lanthanum oxide.

4. A process for producing a yttrium oxide-stabilized zirconia sinter for solid electrolyte, using a rare earth oxide concentrate as a source of yttrium oxide, the concentrate including 50 to 90 weight percent of yttrium oxide.

5. A process according to claim 4, wherein the total content of rare earth oxides in the zirconia sinter is regulated to 3 to 12 mole percent in terms of R₂O₃ wherein R denotes a rare earth element.

6. A process according to claim 4 or 5, wherein the rare earth oxide concentrate includes 50 to 90 weight percent of yttrium oxide, 5 to 30 weight percent of oxides of at least two elements selected from the group consisting of elements having atomic numbers 21 and 57 to 64, and 10 to 40 weight percent of oxides of at least two elements selected from the group consisting of elements having atomic numbers 65 to 71 (100 weight percent in total).

7. A process according to any one of claims 4 to 6, wherein the rare earth oxides include 10 weight percent or less of cerium oxide, and 5 weight percent or less of lanthanum oxide.

## Amended claims

### Amended claims under Art. 19.1 PCT

1. A zirconia sinter sheet for solid electrolyte comprising zirconia as a main component, and 3 to 12 mole percent of rare earth oxides in terms of R₂O₃ wherein R denotes a rare earth element, the rare earth oxides including 50 to 90 weight percent of yttrium oxide and other rare earth oxides as substantial remainder.
2. A zirconia sinter sheet for solid electrolyte according to claim 1, wherein the rare earth oxides includes 50 to 90 weight percent of yttrium oxide, 5 to 30 weight percent of oxides of at least two elements selected from the group consisting of elements having atomic numbers 21 and 57 to 64, and 10 to 40 weight percent of oxides of at least two elements selected from the group consisting of elements having atomic numbers 65 to 71 (100 weight percent in total).
3. A zirconia sinter sheet for solid electrolyte according to claim 1 or 2, wherein the rare earth oxides includes 10 weight percent or less of cerium oxide, and 5 weight percent or less of lanthanum oxide.
4. A process for producing a yttrium oxide-stabilized zirconia sinter sheet for solid electrolyte, using a rare earth oxide concentrate as a source of yttrium oxide, the concentrate including 50 to 90 weight percent of yttrium oxide.
5. A process according to claim 4, wherein the total content of rare earth oxides in the zirconia sinter sheet is regulated to 3 to 12 mole percent in terms of R₂O₃ wherein R denotes a rare earth element.
6. A process according to claim 4 or 5, wherein the rare earth oxide concentrate include 50 to 90 weight percent of yttrium oxide, 5 to 30 weight percent of oxides of at least two elements selected from the group consisting of elements having atomic numbers 21 and 57 to 64, and 10 to 40 weight percent of oxides of at least two elements selected from the group consisting of elements having atomic numbers 65 to 71 (100 weight percent in total).
7. A process according to any one of claims 4 to 6, wherein the rare earth oxides include 10 weight percent or less of cerium oxide, and 5 weight percent of less of lanthanum oxide.
8. A process according to any one of claims 4 to 7, using powder including zirconia and rare earth oxides, the powder having an average particle diameter of 0.3 to 3 µm, and the diameter of 90 volume percent of particles being 0.5 to 10 µm.
